# EUROPÄISCHE PATENTSCHRIFT

(11) **EP 1 192 092 B1**
(45) Veröffentlichungstag und Bekanntmachung des Hinweises auf die Patenterteilung: **15.09.2004**
(21) Anmeldenummer: 01923713.0
(22) Anmeldetag: 05.04.2001
(51) Int. Cl.: B65D 51/00, B29C 45/00

(54) **Verfahren zur Herstellung eines Spritzlings für pharmazeutische Anwendungen**
Method for production of an injection moulded object for pharmaceutical applications
Procédé de moulage par injection d'un objet servant à des applications pharmaceutiques

(30) Priorität: 06.04.2000 DE 10016961; 10.03.2001 DE 10111550
(43) Veröffentlichungstag der Anmeldung: 03.04.2002
(60) Teilanmeldung: 03018445.1
(73) Patentinhaber: MARO b.v., 4703 RJ Roosendaal (NL)
(72) Erfinder: CLAESSENS, Albert, Louis, Victor, Jozef, B-3530 Houthalen (BE)
(74) Vertreter: Müller, Enno, Dipl.-Ing.
(86) Internationale Anmeldenummer: PCT/EP2001/003891
(87) Internationale Veröffentlichungsnummer: WO 2001/076967

(56) Entgegenhaltungen:
- EP-A- 0 873 841
- WO-A-97/29151
- WO-A-98/36986
- US-A- 4 306 852

## Beschreibung

Die Erfindung bezieht sich auf ein Verfahren zur Herstellung eines Spritzlings nach den Merkmalen des Oberbegriffes des Anspruches 1.

Spritzlinge dieser Art weisen nicht selten ästhetische Fehler auf. Solche, das optische Erscheinungsbild beeinträchtigende Unregelmäßigkeiten können in Form von Fließzungenrändern auftreten und bilden sich vornehmlich auch im Bereich des Anspritzpunktes aus. Man ist daher bereits dazu übergegangen, bei Verschusstopfen etwa, den Anspritzpunkt in einer Verdecktlage, beispielsweise in einem Höhlungsbereich eines Verschlussstopfens, anzuordnen. Eine solche Anordnung ist aber mit Schwierigkeiten verbunden, da auch die Düse der Spritzvorrichtung einen gewissen Raumbedarf hat. Fließfehler an Abdichtungsstellen, beispielsweise an einem flanschartigem Randbereich eines solchen Verschlussstopfens, dem Stirnrand der Flansche zugewandt, können sogar Dichtungsprobleme verursachen.

Darüber hinaus werden an derartige Spritzlinge auch hohe sonstige technische Anforderungen gestellt. So darf es beim Durchstechen möglichst nicht zum Abbröckeln von Materialteilen, die mitgerissen werden könnten, kommen Auch muss ein Durchstechen behinderungsfrei möglich sein. Im Fall von Schutzkappen wird etwa auch ein guter Materialzusammenhalt, der etwa auch bei den anderen Ausführungsformen des Spritzlings wesentlich ist, gefordert.

Aus der WO97/29151 A ist ein Elastomerkunststoff mit einem hohen mineralischen Füllstoffanteil bekannt. Die Verarbeitung dieses Elastomerkunststoffes wird im üblichen Spritzgussverfahren vorgenommen. Aus der US-PS 4,306,852 ist das Spritzgießen im Heißkanal-Verfahren als solches bekannt.

Ausgehend von dem genannten Stand der Technik beschäftigt sich die Erfindung mit der Aufgabe, ein Verfahren zur Herstellung eines möglichst fehlerfreien Spritzlings anzugeben, das zu dem vorteilhaft rationell anwendbar ist und wobei der erhaltene Spritzling für pharmazeutische Anwendungen geeignet ist.

Diese Aufgabe ist beim Gegenstand des Anspruches 1 gelöst.

Wenn nur ein Teilbereich aus dem thermoplastischen Elastomerkunststoff mit einem mineralischem Füllstoffanteil von 30 % oder mehr hergestellt wird, kann dieser Teilbereich mit einer einen Anspritzpunkt aufweisenden Anspritzung ausgeführt werden, welcher Anspritzpunkt mit einem einen zweiten Teilbereich des Spritzlings bildenden anderen Kunststoff überspritzt wird. Hier kommt insbesondere ein üblicher Kunststoff für Spritzteile zur Anwendung wie etwa PP, PE usw. Konkret ist auf einen entsprechenden Füllstoffanteil in Gewichtsprozenten abgestellt. Vorteilhaft wird dem thermoplastischen Elastomerkunststoff auch ein Anteil an Weichmachern beigegeben. Hinsichtlich eines Verschlusstopfens kann vorgesehen sein, dass die zentrale Heißkanal-Anspritzung im Bereich der Stopfendecke des überwiegend dickwandig ausgebildeten Verschlussstopfens vorgenommen wird. Auch kann der Stopfenkragen mit einer größeren Wandstärke ausgebildet werden als die Stopfendecke in ihrem zentralen Bereich. In Bezug auf eine Dichtung kann die Anspritzung in der oberen Außenfläche, bevorzugt dort zentral, vorgenommen werden. Weiter bevorzugt, betreffend alle Ausführungsformen, kann der Heißkanalverschluss in Form eines stempelartigen Nadelkopfes verwendet werden, dessen ebenflächige Stirnfläche im Verschlusszustand ebenengleich oder in das Spritzlingsinnere versetzt bezüglich der in die Spritzlingswandung mit bildenden, umgebenden Düsenwandung in diese übergeht. So wird ermöglicht, dass ein glattflächiger Anspritzpunkt erreicht wird und die Angussfläche des Anspritzpunktes ebenengleich oder tiefenmäßig versetzt in die umgebende Spritzlingswandung übergeht.

Bei Ausbildung einer Schutzkappe für medizinische Spritzen in den vorstehend angegebenen Kunststoff-Spritzverfahren wird ein massiver Kappenhut und ein demgegenüber dünnwandiger Kappenhals ausgeformt. In vorteilhafter Weise erfolgt die Heißkänalanspritzung zentral am Kappenhut. Im Übrigen werden verfahrenstechnisch die gleichen Merkmale bevorzugt, wie sie auch im Bezug auf die Herstellung des Verschlussstopfens bzw. der Dichtung bereits vorstehend beschrieben sind.

Hinsichtlich eines gemäß dem beschriebenen Verfahren erhaltenen Spritzlings ist von Bedeutung, dass der Spritzling zumindest in einem Teilbereich aus einem thermoplastischen Elastomerkunststoff mit einem mineralischem Füllstoffanteil von 30 % oder mehr besteht und dieser Teilbereich einen Heißkanal-Anspritzpunkt aufweist, der als glattflächiger Abdruck gebildet ist. Darüber hinaus ist auch von Bedeutung, dass im Falle eines zweiten Teils des Spritzlings dieser aus einem anderen Kunststoff besteht, insbesondere einem herkömmlichen Spritz-Kunststoff wie PP, PE oder dergleichen, mit welchem dann der Anspritzpunkt des ersten Teilbereichs überspritzt ist. In einem solchen Fall kann dann insbesondere auch der Anspritzpunkt der aus dem elastischen Elastomerkunststoff gebildeten Teilbereichs als Heißkanal-Anspritzpunkt gebildet sein, der dann auch weiter vorzugsweise als glattflächiger Abdruck ausgebildet ist. Den Materialanforderungen derartiger pharmazeutischer Spritzlinge wird ein thermoplastischer Elastomerkunststoff mit einem mineralischen Füllstoffanteil von 30 % oder mehr gerecht. Dies dann, wenn jedenfalls im Falle des Freiligens nach außen an dem Spritzling der Anspritzpunkt durch einen Heißkanal-Anspritzpunkt gebildet ist und ein glattflächiger Abdruck geschaffen ist. Störende Schlieren oder Materialunebenheiten, insbesondere im Bereich des Anspritzpunktes, können nicht mehr festgestellt werden. Gleichwohl ist ein solcher Spritzling mit üblichen Kunststoffspritzverfahren, jedoch Heißkanal-Anspritzung, rationell herstellbar. Bevorzugt ist in diesem Zusammenhang, dass der Abdruck, der durch den Heißkanal-Anspritzpunkt an dem Spritzling geschaffen ist, ohne Versetzung nach außen in die ihn umgebende Spritzlingswandung übergeht. Insbesondere ist bevorzugt, dass der glattflächige Abdruck ebenengleich in die ihn umgebende Spritzlingswandung übergeht. Im Weiteren kann sich aber auch in besonderen Fällen empfehlen, dass der Abdruck gegenüber der ihn umgebenden Spritzlingswandung erhaben ist, also nach außen versetzt ist. Dies bspw. wenn im Zweikomponentenspritzverfahren gearbeitet wird oder der aus dem Elastomerkunststoff bestehende Spritzling Teil eines mehrteiligen Gegenstandes ist, bei welchem der Anspritzpunkt von einem weiteren Teil überdeckt oder darin gar gefangen ist. Denn ein erhabener Abdruck kann sich auch für eine formschlüssige Aufnahme in einem weiteren Teil empfehlen.

Der Spritzling kann insgesamt mehrteilig dadurch sein, dass er etwa im Mehrkomponentenspritzverfahren hergestellt ist, wobei die Einzelteile unmittelbar nach Art einer Verschweißung aneinander haften können, oder aber auch voneinander trennbar oder getrennt sich nach Vollendung des Spritzvorganges vorfinden. In einem solchen mehrteiligen Spritzling, wie er weiter unten noch im Einzelnen beschrieben ist, ist dann der aus thermoplastischem Elastomerkunststoff bestehende Teil ein Teilbereich desselben.

Im Weiteren ist auch bevorzugt, dass ein solcher Spritzling, bzw. der entsprechende Teilbereich des Spritzlings, jedenfalls im Bereich des Anspritzpunktes, dickwandig ausgebildet ist. Dickwandigkeit ist hierbei insbesondere im Hinblick auf eine Länge des Fließweges des eingespritzten Materiales zu der Wandstärke verstanden. Es wird die Länge vom Einspritzpunkt ab gemessen. Als Wandstärke ist hierbei weiter ein Mittelwert über den gesamten Spritzling eingesetzt. Wenn sich ein Wert <5 ergibt, ist Dickwandigkeit im Sinne vorliegender Anmeldung gegeben.

Der Spritzling, bzw. der entsprechende Teilbereich des Spritzlings, liegt als homogener Körper vor. Die angegebene Mischung erbringt eine gummielastische Struktur mit gutem Durchstechverhalten. Auch der Anforderung an ein Nachdichten, etwa bei herausgezogener Kanüle, ist genügt.

Der beigegebene mineralische Füllstoff-Anteil wirkt fließbremsend, was eine erstrebte gleichmäßige Verteilung des Kunststoffes im Zuge des Spritzvorganges vorteilhaft unterstützt. Die Heißkanal-Anspritzung, die vorzugsweise auch in einem zentralen Bereich, weiter vorzugsweise auch an einer Außenfläche, also nicht in einem Höhlungsbereich des Spritzlings vorgenommen ist, begünstigt gleichfalls eine ausgewogene Verteilung des Kunststoffes im Zuge eines Spritzgussvorganges. Die überwiegend dickwandige Ausbildung des Spritzlings, bzw. der entsprechende Teilbereich des Spritzlings, führt auch zu im Wesentlichen gleichen Verhältnis bezüglich eines, wenn auch bei dem angegebenen Werkstoff vergleichsweise sehr geringen Schrumpfverhaltens. Der Füllstoff ist vorzugsweise ein Silikat. Es kann sich beispielsweise um Magnesiumsilikat (Talg) handeln. Dieser Füllstoff wirkt sich im Sinne einer vorteilhaften Fließhemmung aus. Gleichwohl geschieht die Füllung eines entsprechenden Formnestes absolut gesehen sehr rasch. Bei der üblichen Größenordnung etwa hier betroffener Verschlussstopfen oder sonstiger Gegenstände vergleichbarer Größenordnung beträgt die Füllzeit ca. 0,1 Sekunde. Es ist zudem bezüglich des beschriebenen thermoplatischem Elastomerkunststoffes, dem gegebenenfalls noch ein Weichmacher beigegeben ist, eine überraschend geringe Abhängigkeit seiner Eigenschaften von der Temperatur gegeben. Die Füllung einer Kavität lässt sich weitestgehend unabhängig von der Fülltemperatur ohne Auftreten eines sogenannten Spagetti-Effektes erreichen. Die Shore-Härte A liegt zwischen 45 und 60, bevorzugt bei 55.

Konkreter bezüglich eines hier betroffenen Verschlussstopfens ist im Hinblick auf eine gute Penetrierbarkeit mit der Kanüle einer Spritze vorgesehen, dass die Stopfendecke einen zentralen Bereich geringer Wandstärke und einen Randbereich größerer Wandstärke, gemessen in Vertikalrichtung, aufweist. Der Randbereich ist im Anwendungsfall von einer Bördelkappe entsprechender Infusionsflaschen-Sicherung umfasst. Gegebenenfalls unter Spannwirkung umfasst.

An die Verschlussdecke schließt sich nach unten in Vertikalrichtung ein Stopfenkragen an. Dieser Stopfenkragen weist gleichfalls bevorzugt jedenfalls in seinem anfänglichen, an die Stopfendecke anschließenden, Bereich eine größere Wandstärke auf als die Stopfendecke in ihrem zentralen Bereich. Zugleich schließt damit der Stopfenkragen bevorzugt an den Bereich größerer Wandstärken des Randbereiches des Verschlussstopfens an. Weiter ist bevorzugt, dass die Heißkanal-Anspritzung hinsichtlich des Spritzkanal-Verschlusses mit einem stempelartigen Nadelkopf vorgenommen ist, wobei die ebenflächige Stirnfläche des Nadelkopfes im Verschlusszustand der Spritzgießform ebenengleich in die die Spritzlingswandung mitbildende, umgebende Düsenwandung übergeht. Entsprechend lässt sich auch formulieren, dass der glattflächige Anspritzpunkt, das heißt die Angussfläche, ebenengleich in die umgebende Spritzlingsfläche übergeht. Es ergibt sich ein glattflächiger Abdruck des stempelartigen Nadelkopfes am Spritzling, wobei wirksam selbst kleinste Rauhungen oder Zerklüftungen vermieden sind. Der Spritzling ist nacharbeitungsfrei hergestellt. Die genannte Ausgestaltung des Verschlussstopfens hat den besonderen Vorteil, dass durch die Kanüle keinerlei etwa durch Ungenauigkeiten hervorgehobene Fraktionierungspartikel abgetragen werden können und in die Flasche gelangen können. Die formvollendete glatte Fläche besteht somit auch und insbesondere bezüglich des etwa stecknadelkopfgroßen Anspritzpunktes selbst.

Eine weitere Ausführungsform eines solchen Spritzlings für pharmazeutische Anwendungen ist eine Schutzkappe für medizinische Spritzen. Diese Schutzkappe wird über die Kanüle einer Spritze gesteckt, um diese hinsichtlich mechanischer Beeinträchtigungen oder auch Verschmutzungen zu schützen. Entsprechend besteht auch eine solche Schutzkappe aus einem thermoplastischen Elastomerkunststoff, der einen mineralischen Füllstoffanteil von 30 % oder mehr aufweist. Es ist eine Heißkanal-Anspritzung im Bereich eines Kappenhutes der Schutzkappe gegeben. Hier werden die gleichen Eigenschaften erreicht, insbesondere hinsichtlich des Äußeren der Schutzkappe, die zuvor auch in Bezug auf den Verschlussstopfen erläutert worden sind. Auch der als Schutzkappe ausgebildete Spritzling kann hinsichtlich des Werkstoffes einen Anteil an Weichmacher enthalten. Die Heißkanal-Anspritzung ist auch hier bevorzugt zentral, im Bereich der Kappenhut-Spitze, vorgenommen. Auch bezüglich der Schutzkappe trifft damit die Erläuterung zu, wie sie zuvor im Einzelnen hinsichtlich des stempelartigen Nadelkopfes, der bevorzugt spritzgießmaschinenseitig eingesetzt wird und der hiermit erreichten Vorteile gegeben ist.

Ein weiterer Gegenstand, der durch einen solchen, für pharmazeutische Anwendungen dienenden Spritzling verkörpert sein kann, ist ein Dichtungselement, wie es bei sogenannten "Bottle-Pack"-Flaschen zur Anwendung kommt. Diesbezüglich ist insbesondere auf den Offenbarungsgehalt der Deutschen Patentanmeldungen 195 00 460 und 196 20 196 verwiesen. Ein solches Dichtungselement besitzt gewöhnlich einen umlaufenden Flansch geringerer Wandstärke oder ober- und/ oder unterseitig eine dem Rand zugeordnete umlaufende Nut und einen mittleren Bereich großer Wandstärke. Auch hier erfolgt die Anspritzung vorzugsweise zentral in der oberen Außenfläche. Im Übrigen treffen auch hier die beschriebenen geometrischen Merkmale, etwa hinsichtlich der Dickwandigkeit, und die Merkmale hinsichtlich der Reinheit und Schlierenfreiheit zu, wie sie zuvor im Bezug auf den Spritzling allgemein und die weiteren Anwendungsfälle bereits erläutert sind. Insbesondere kann ein solcher Gegenstand auch im Mehrkomponenten-Spritzverfahren hergestellt sein, wobei dann der eine Teilbereich, etwa der die Außenklappe bildende Teilbereich aus Hartkunststoff, die Form bildet (wiederum zumindest teilweise) für den nachträglich gespritzten Elastomerkunststoff-Teilbereich. Es kann aber auch umgekehrt vorgegangen werden. Besonders in letzterem Fall ist es möglich und ggf. sogar angezeigt, den Heißkanal-Anspritzpunkt erhaben bzgl. der umgebenden Spritzlingswandung aus Elastomerkunststoff herzustellen, jedoch letztlich versenkt bzgl. der Spritzlingswandung eines zweiten Teilbereichs aus einer anderen Kunststoffkomponente, insbesondere einer Hartkunststoffkomponente.

Der Gegenstand der Erfindung ist nachstehend anhand zweier zeichnerisch veranschaulichter Ausführungsbeispiele näher erläutert. Es zeigt:
- Fig.1: einen im Kunststoff-Spritzverfahren hergestellten Verschlussstopfen in Seitenansicht, das erst Ausführungsbeispiel darstellend;
- Fig. 2: die Draufsicht hierzu;
- Fig. 3: die Unteransicht;
- Fig. 4: einen Vertikalschnitt durch eine Infusionsflasche mit zugeordnetem Verschlussstopfen, unter Aufbringen einer Bördelkappe gesichert;
- Fig. 5: einen Schnitt durch den Formnestbereich einer Spritzgießvorrichtung, unverfüllt;
- Fig. 6: eine gleiche Darstellung, jedoch bei verfülltem Formnest;
- Fig. 7: eine im Kunststoff-Spritzverfahren erzeugte Schutzkappe für eine Spritze, in Seitenansicht;
- Fig. 8: einen Vertikalschnitt durch die Schutzkappe, stark vergrößert, zusammen das zweite Ausführungsbeispiel verkörpernd;
- Fig. 9: in Seitenansicht einen dichtungsverschlossenen Behälter, wie er als Infusionsflasche Verwendung findet;
- Fig. 10: einen Querschnitt durch den Gegenstand gemäß Fig. 9, im Bereich der Verschlussvorrichtung, in einer ersten Ausführungsform;
- Fig. 11: eine Darstellung gemäß Fig. 10 einer zweiten Ausführungsform;
- Fig. 12: eine vergrößerte Querschnittsdarstellung des Anspritzbereiches bei bezüglich umgebender Spritzlingswandung in das Innere versetztem Nadelkopf;
- Fig. 13: eine Darstellung gemäß Fig. 6, jedoch mit gegenüber der umgebenden Spritzlingswandung nach außen versetztem Anspritzpunkt; und
- Fig. 14: eine Darstellung des Gegenstandes gemäß Fig. 11, wobei der Anspritzpunkt des Elastomerkunststoff-Teilbereiches gegenüber der umgebenden Spritzlingswandung erhaben ist und zugleich in einem weiteren Teilbereich des Spritzlings aufgenommen ist.

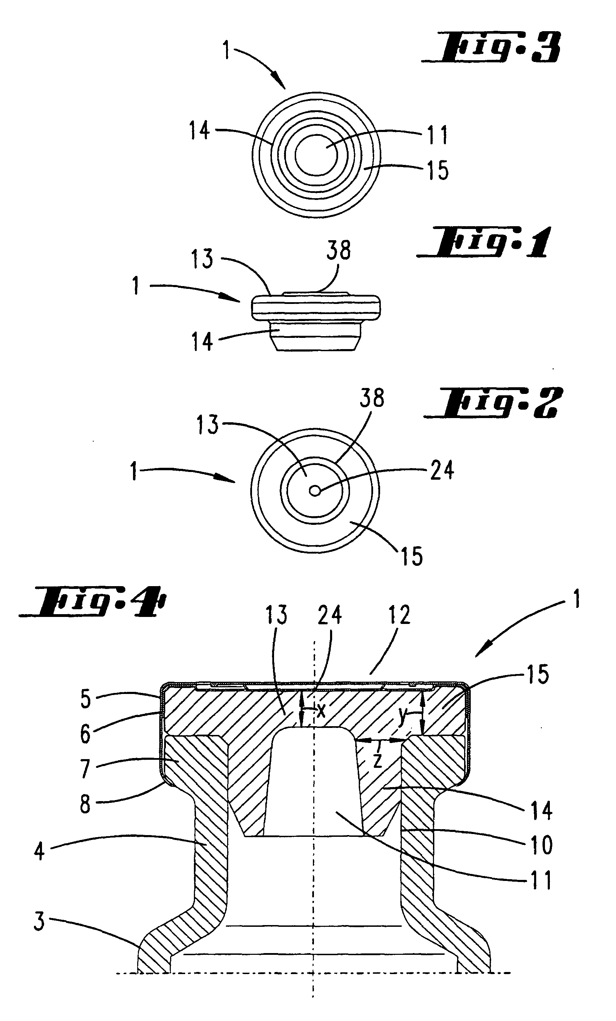

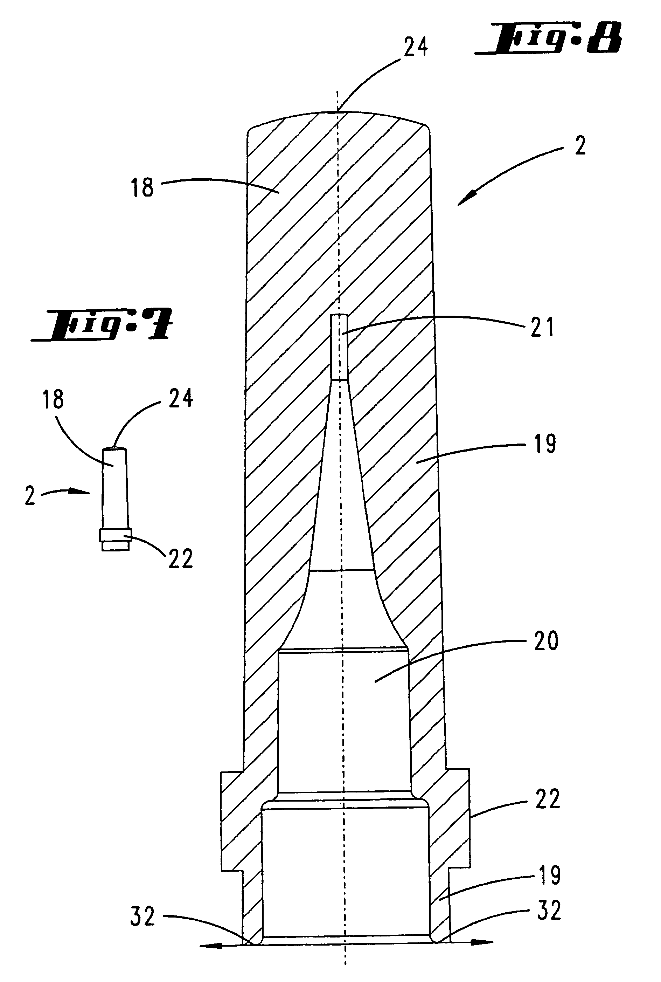

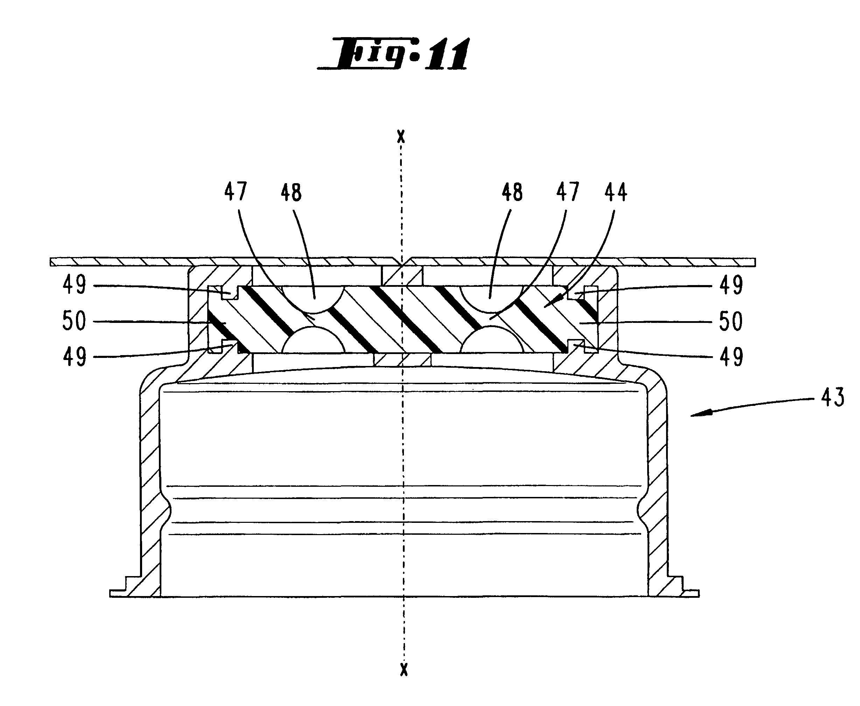

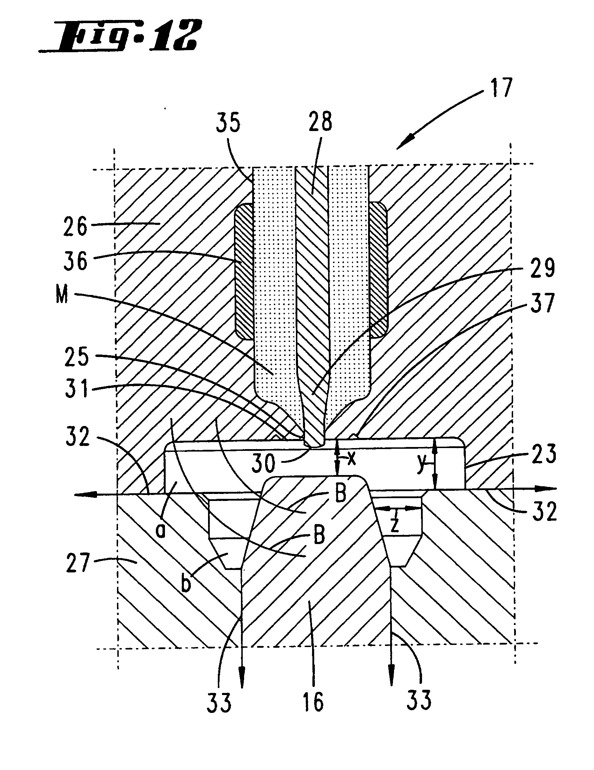

Der in Fig. 1 dargestellte Verschlussstopfen 1 und die in den Fig. 10 und 11 dargestellten Dichtungen 44 und die in Fig. 7 wiedergegebene Schutzkappe 2 sind im Kunststoff-Spritzverfahren hergestellt.

Verwendung findet ein thermoplastischer Elastomer-Kunststoff in gummiartiger Elastizität und trotzdem ausreichender Eigensteifigkeit.

Der Verschlussstopfen 1 lässt sich inhaltsschützend einer Flasche 3 zuordnen. Es handelt sich im pharmazeutischen Bereich einsetzbare Flasche 3, wie beispielsweise eine Infusionsflasche.

Die in Fig. 4 dargestellte Flasche 3 zeigt den Verschlussstopfen 1 dem Hals 4 der Flasche 3 zugeordnet, stopfengesichert durch eine metallische Bördelkappe 5. Die nimmt noch eine Innenkappe 6 auf. Die demgegenüber als Außenkappe zu bezeichnende Bördelkappe 5 ist, um einen Bund 7 des Flaschenhalses 4 gehend, angerollt. Die Bödelstelle trägt das Bezugszeichen 8.

Die Flasche 3 besteht beispielsweise aus Glas.

Der Verschlussstopfen 1 ist als Hohlstopfen realisiert. Der sitzt dichtend in einer im Wesentlichen zylindrischen Mündung 10 des Halses 4. Die zum Flascheninnenraum hin öffnende Höhlung des Hohlstopfens trägt das Bezugszeichen 11.

Der Verschlussstopfen 1 ist als durchstechbarer Verschlusskörper realisiert. Hierzu wird der im Wesentlichen zentral liegende Durchstechbereich 12 des Verschlussstopfens 1 freigelegt. Diesbezügliche Einzelheiten ergeben sich aus der nicht vorveröffentlichten deutschen Patentanmeldung 100 05 833.

Den Durchstechbereich 12 stellt eine Stopfendecke 13, die sich flaschenseitig in einen Stopfenkragen 14 fortsetzt.

Beispielsweise aus Fig. 4 ist entnehmbar, dass die Stopfendecke 13 einen zentralen Bereich, stellend den Durchstechbereich 12, geringerer Wandungsstärke x und einen Randbereich 15 größerer Wandstärke y aufweist. Das Verhältnis von x : y liegt bei 3 : 4 und in Fig. 5 eher bei 2 : 3 und stellt auf eine etwas geringere, zentrale Materialanhäufung ab, die das Durchstechverhalten begünstigt.

Unter Betrachtung der Verhältnisse beispielweise in Fig. 5, wird deutlich, dass auch der Stopfenkragen zumindest in seinem Wurzelbereich zur Stopfendecke 13 hin eine größere Wandstärke Z aufweist als die Stopfendecke 13 in ihrem zentralen Bereich, also Durchstechbereich 12.

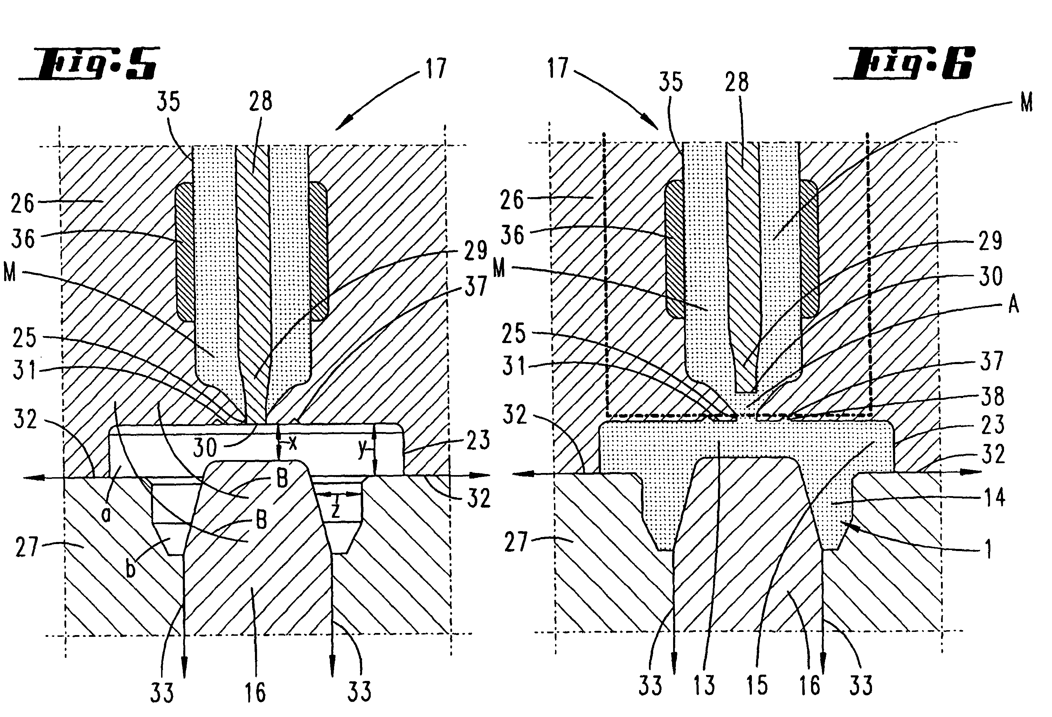

Trotz dieser partiellen Unterschiede in den Wandstärken liegt insgesamt eine überwiegend dickwandige Ausbildung des Verschlussstopfens 1 vor. Dieser insgesamt dickfleischige Spritzling ist von guter Gebrauchsfestigkeit und auch stabil genug für den Auswerfer 16 der in den Fig. 5 und 6 partiell dargestellten Spritzgießvorrichtung 17.

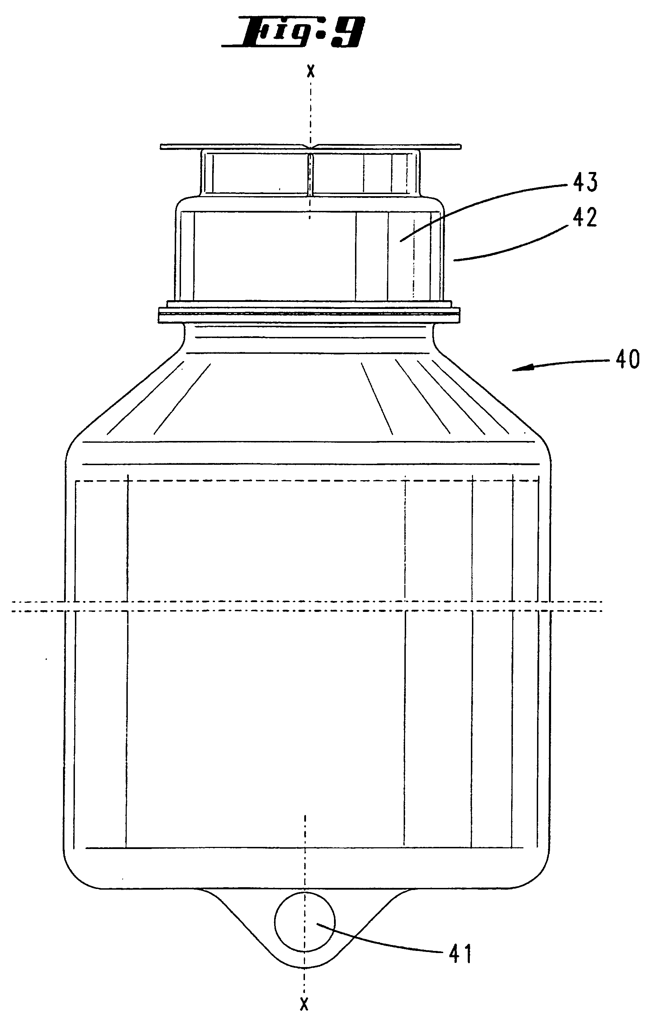

Die in den Fig. 7 und 8 dargestellte Schutzkappe 2 für Spritzen im medizinischen Bereich ist wandungsmäßig unter Berücksichtigung anderer Schwerpunkte gestaltet. So weist der lange, außen zylindrische Körper einen Kappenhut 18 größerer Materialanhäufung auf, welcher Kappenhut sich in Längsrichtung in einen dünnwandigen Kappenhals 19 fortsetzt. Die die Kanüle schützend umgehende Wandung des Kappenhalses 19 ist innen gestuft gehöhlt; die entsprechende Höhlung 20 geht in eine engste Zone 21 über, ausgestaltet als Einstechzone zum Schutz und Zuhalten des dortigen Endes des Nadelkörpers.

Das Halsende weist die geringste Wandungsdicke auf. In diesem Bereich besitzt der mantelwandseitig im Wesentlichen zylindrisch gehaltene Spritzling einen auftragenden Ringbund 22.

Der Anspritzpunkt liegt an exponierter Stelle des Kappenhutes 18 nämlich an der Kappenhut-Spitze. Die recht dickwandige Decke ist.flachkonvex verrundet.

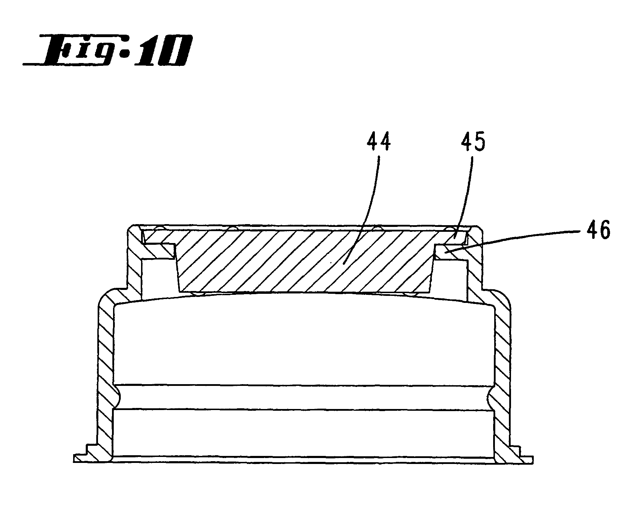

In Fig. 9 ist eine Transfusionsflasche 40 dargestellt, die an ihrem Boden eine Öse 41 besitzt, zur stürzenden Anordnung der Transfusionsflasche 40. Der Flaschenkopf 42 weist dann nach unten.

Der Flaschenkörper besteht aus Kunststoff, beispielsweise PE in durchdringbarer Wandungsdicke. Bis zur Durchdringung mittels beispielsweise Kanülen oder Spikes.

Diese der Flasche eigene Verschlusswand ist im Einzelnen nicht dargestellt. Der Verschlusswand übergestülpt ist eine Kappe 43, wie sie in den Fig. 10 und 11 in unterschiedlichen Ausführungsformen in Einzelheit dargestellt ist. Innerhalb der Kappe 43 ist ein Spritzling 44 angeordnet, der eine Dichtung darstellt. Die Dichtung ist durchstechbar und befindet sich der nicht dargestellten Verschlusswand der Flasche 40 vorgelagert. Die Dichtung 44 besitzt, beim Ausführungsbeispiel der Fig. 10, einen umlaufenden Flansch 45, der auf einem zugeordneten Flansch 46 der Kappe 43 aufliegt. Der Flansch 45 hat eine deutlich geringere Wandstärke als ein mittlerer Bereich der Dichtung 44.

Beim Ausführungsbeispiel der Fig. 11 besitzt die Dichtung 44 Durchstechbereiche 47, die dickenverkleinert sind. Von der Ober- und Unterseite ausgehend sind rückenzueinanderliegende, halbkugelförmige Mulden 48 ausgeformt. Die Mulden 48 führen im Bereich ihrer größten vertikalen Erstreckung dazu, dass die Dicke der Dichtung 44 auf etwa 1/5 gegenüber ihrer größten Dicke reduziert ist.

Beim Ausführungsbeispiel der Fig. 11 sind überdies noch umlaufend ober- und unterseitig der Dichtung 44, Nuten 49 vorgesehen, wo hingegen der Randbereich 50 wiederum eine vertikale Erstreckung aufweist, wie sich auch der Mittelbereich der Dichtung 44, in welchem bevorzugt an eine Außenfläche auch der Anspritzpunkt ist, aufweist.

Die Spritzlinge in Form des Verschlussstopfens 1, der Schutzkappe 2 und der Dichtungen 44 sind nicht nur jeweils im Kunststoff-Spritzverfahren erzeugt, sondern auch unter Verwendung gleichen Werkstoffes. Zur Anwendung kommt ein thermoplastischer Elastomerkunststoff (TPE). Der Werkstoff enthält eine Beimischung aus mineralischem Füllstoff. Der diesbezügliche Füllstoffanteil beträgt 30 % oder mehr. Zur Anwendung kommt als Füllstoff bevorzugt Magnesiumsilikat. Der mineralische Füllstoff hat gewisse fließbremsende Eigenschaften, so dass es zu einem Strömungszusammenhalt beim Befüllen des Formnestes 23 der Spritzgießvorrichtung 17 kommt. Anhand der Fig. 5 und 6 sind die spritztechnischen Besonderheiten, vorrangig am Beispiel als Verschlussstopfen, erläutert:

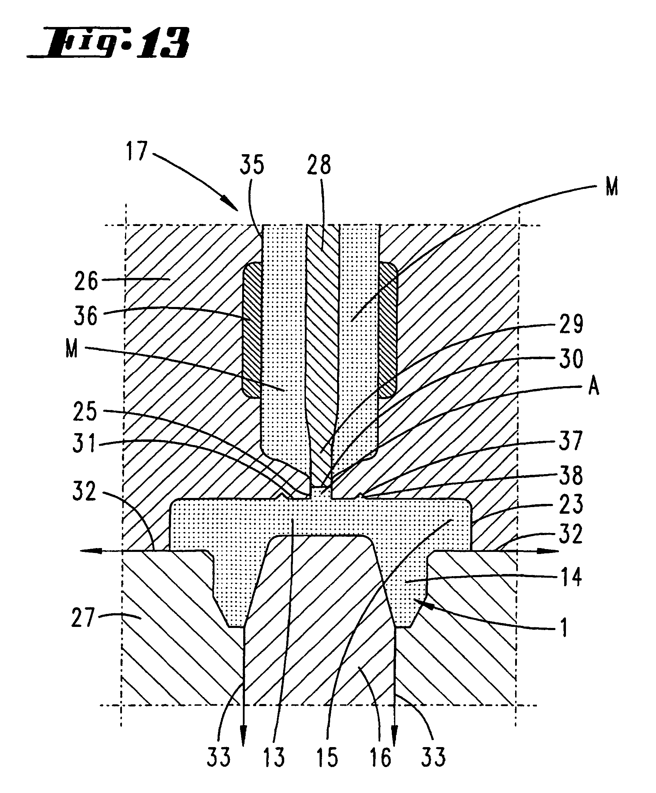

Der Anspritzpunkt A (vgl. etwa Fig. 6 und 13) der Heißkanal-Anspritzung an den Spritzling (vgl. bspw. Fig. 2, 4, 7, 8,14) ist mit 24 bezeichnet. Er kann an der Schutzkappe 2 zentral liegen und liegt am Verschlussstopfen 1, wie auch bei den Dichtungen 44 bevorzugt zentral. Erreicht wird dadurch eine gleichmäßige Verteilung bei hoher Fließgeschwindigkeit. Ästhetische Fehler treten nicht auf. Selbst optische Unregelmäßigkeiten wie farbliche Abweichungen entfallen. Außerdem kann in gängigen Spritzgießformen gearbeitet werden. Dabei ist die Kavitätenfüllung weitgehend temperaturunabhängig. Sie kann zwischen 200 und 280°C liegen, ohne dass sich größere Unterschiede in der Qualität abzeichnen würden.

Der zentrale Zugang der Spritzgießmasse M (vgl. Fig. 5, 6 dargestellt am Beispiel der Verspritzung eines Verschlussstopfens) erfolgt über eine Düse 25 eines Formoberteils 26. Das zugehörige Formunterteil ist mit 27 bezeichnet. Das Formnest 23 ist anteilig verteilt. Im Zentrum des Formunterteils 27 befindet sich ein vertikal bewegbarer Formvorsprung, gestellt durch den Auswerfer 16.

Die Füllgabe ist jeweils ventilkontrolliert. Hierzu befindet sich im Formoberteil 26 eine vertikal bewegbare Nadel 28. Deren Nadelkopf 29 tritt schließend in die Mündung der Düse 25 ein (vgl. Fig. 5).

Der stempelartige Nadelkopf 29 der Heißkanal-Anspritzung A weist eine ebenflächige Stirnfläche 30 auf. Die Stirnfläche erstreckt sich im Verschlusszustand der Heißkanal-Anspritzung A ebenengleich in die die Spritzlingswandung mitbildende, die Mündung der Düse 25 umgebende Düsenwandung 31. Die Spritzlingswandung kann die Oberseite der Stopfendecke 13 des Verschlussstopfens 1 sein oder die korrespondierende Oberfläche des Kappenhutes 18 der Schutzkappe 2 bzw. der Dichtung 44 der Fig. 10 und 11.

Verweisend auf die Figuren 5 und 6 ist erkennbar, dass zwischen Formoberteil 26 und Formunterteil 27 eine horizontale Fuge besteht, bildend eine erste Luftabführung 32 bei eindringendem Spritzmaterial, der Spritzgießmasse M also. Eine zweite Luftabführung 33 besteht in vertikaler Richtung, und zwar in Form einer Ringfuge zwischen dem Auswerfer 16 und einer formpassenden Aufnahme des Formunterteils 27 für diesen. Hierdurch ist eine vollständige Befüllung des Formnestes 23 in der vorgesehenen Zeit erreicht, ohne dass an dem Spritzling außenseitig Markierungen wie Fließschlieren oder dergleichen entstehen. Das von der Düse 25 unter Druck ausgehende Material wird durch keine Sacköffnung unentlüftbar getrennt. Legt man den durch Bogenlinien B in Fig. 5 dargestellten Fließweg zugrunde, so würde ein Ausweichen aus den dargestellten Endzone a und b an Luft nicht gehindert sein zufolge der beschriebenen Luftabführungen 32, 33. Bei den Gegenständen gemäß den Fig. 7 und 10 sind entsprechende Taschungen auch nicht möglich. Dort weicht die verdrängte Luft über die der ersten Luftabführung 32 entsprechende ab.

Beim Gegenstand der Fig. 11 kann es wieder günstig sein, mehrere derartige Luftabführungen werkzeugmäßig vorzunehmen.

Bezüglich der beschriebene Spritzlinge ist auch werkstoffmäßig das Anforderungsprofil dahingehend beachtet, dass solche Spritzlinge autoklavbeständig sind. Sie ertragen Temperaturen von 120° über einen längeren Zeitraum. Trotz der erläuterten Beimischung bleibt der Werkstoff hervorragend spritzfähig. Es ist der erforderliche Kompromiss gefunden. Im Übrigen ist dem thermoplastischen Elastomerkunststoff auch noch Weichmacher beigegeben.

Die zentral in dem Spritzkanal 35 stehende Nadel 28 ist kanalwandungsseitig von einem Heizelement 36 umgeben.

Die Düsenwandung 31 des Formoberteils 26 weist im Falle des Verschlussstopfens 1 oder einer Dichtung 44 eine Ringnut 37 auf. Die Ringnut verläuft konzentrisch zur Düse 25, ist dreieckigen Querschnitts und formt auf der Oberseite der Stopfendecke 13 gleichsam einen Zielring 38 aus für das korrekte Ansetzen der Kanüle oder eines Spikes.

Zufolge der geschilderten Ebenflächigkeit der Stirnfläche 30 der Nadel 28 kommt es nach dem Entformen zu einem glatten Abtrennen der Nadel, d. h., ohne einen rauen, sandstrukturartigen Abdruck zu hinterlassen. Insoweit werden auch keine abragenden Partikel bei Ingebrauchnahme durch die Kanüle in das Innere der Flasche 3 eingetragen. Der in Fig. 2 dargestellte Abdruck ist einerseits nur zeichnerisch hervorgehoben. Andererseits kann sich ein solcher Abdruck auch ergeben, wenn entsprechend Fig. 12 vorgegangen wird. Hier überragt im Verschlusszustand die Stirnfläche 30 der Nadel 28 die umgebende Düsenwandung. Entsprechend ist an dem Spritzling der Anspritzbereich in das Innere des Spritzlings versetzt ausgebildet. Die Versetzung in das Innere kann beispielsweise bei einem Nadeldurchmesser von 1,5 mm insgesamt 0,3 mm betragen. Hierbei kann die Nadelspitze auch im Einzelnen zunächst zylindrisch und dann mit einer balligen Stirnfläche ausgebildet sein, wobei der zylindrische Bereich beispielsweise 0,05 mm und der ballige Stirnflächenbereich weitere 0,3 mm in das Innere des Spritzlings versetzt sein kann. Trotzdem bleibt es aber bei der glatten, auch ziehfadenfreien Ablösung.

Übliche Entformungsschrägen am Spritzling sind berücksichtigt.

In Fig. 13 ist eine Darstellung gemäß Fig. 6 wiedergegeben, bei welcher der Anspritzpunkt A des Spritzlings, hier des Verschlussstopfens 13, gegenüber der umgebenden Spritzlingswandung nach außen versetzt gebildet ist. Ersichtlich ist der Nadelkopf 29 hier im Verschlusszustand bzgl. der umgebenden Düse 25 soweit zurückgezogen, dass sich ein innerhalb der Düse 25 verbleibender zylindrischer Ansatz des Spritzlings 13 ergibt.

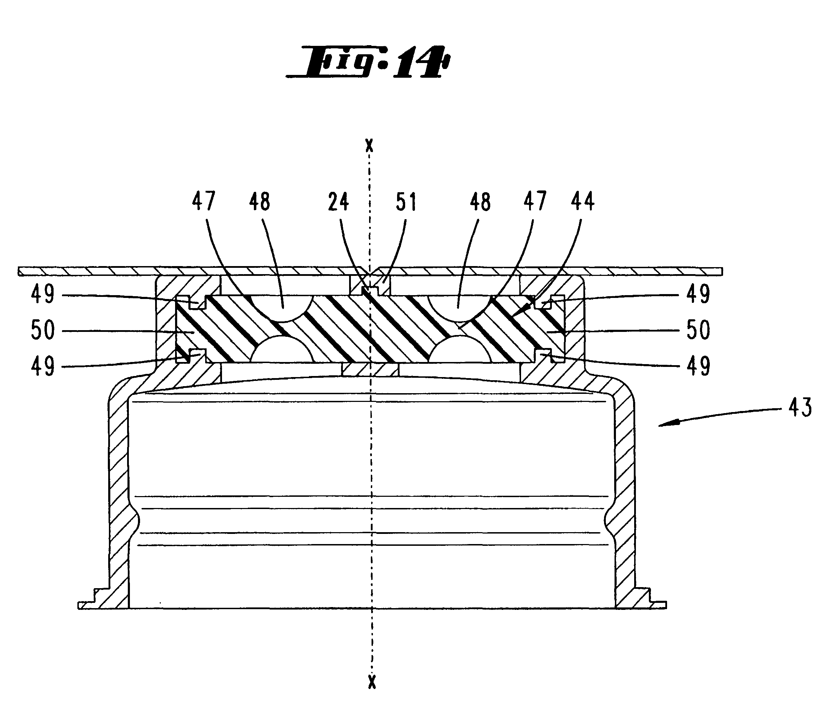

Bei der Ausführungsform der Fig. 14 ist der Gegenstand gemäß Fig 11 im Zweikomponenten-Spritzverfahren hergestellt, wobei der Anspritzpunkt 24 gegenüber der umgebenden Spritzlingswandung nach außen versetzt geformt ist, entsprechend einer formtechnischen Gestaltung gemäß Fig. 13. Nachfolgend zu dem hier als Dichtung 44 ausgebildeten Spritzling aus Elastomerkunststoff ist die umgebende Kappe einschließlich eines, hier als Steg 51 ausgebildeten Kappenteiles gespritzt worden, das den Anspritzpunkt 24 überfängt. Das Merkmal, dass der Anspritzpunkt 24 des Teilbereiches des (Gesamt-) Spritzlings, bei Herstellung im Zweikomponenten-Spritzverfahren, der aus thermoplastischem Elastomerkunststoff besteht, von dem weiteren Teilbereich des Spritzlings aus Kunststoff zweiter Komponente überfangen ist, hat auch unabhängig davon Bedeutung, wie der Anspritzpunkt 24 ausgebildet ist.

## Patentansprüche

1. Verfahren zur Herstellung eines Spritzlings für eine pharmazeutische Anwendung, wie einen Verschlussstopfen (1) für pharmazeutische Flaschen, eine Schutzkappe (2) für medizinische Spritzen oder ein Dichtungselement (44) für pharmazeutische Behältnisse, **dadurch gekennzeichnet, dass** der Spritzling zumindest in einem Teilbereich aus einem thermoplastischen Elastomerkunststoff mit einem mineralischen Füllstoffanteil von 30% oder mehr hergestellt wird und dieser Teilbereich mit einer Heißkanal-Anspritzung ausgeführt wird, wobei der Anspritzpunkt als glattflächiger Abdruck ausgebildet wird.

2. Verfahren nach Anspruch 1, **dadurch gekennzeichnet, dass** der Spritzling insgesamt aus dem Elastomerkunststoff hergestellt wird.

3. Verfahren nach Anspruch 1 oder 2, **dadurch gekennzeichnet, dass** der Heißkanalanspritzpunkt ohne Versetzung nach außen in die umgebende Spritzlingswandung übergehend hergestellt wird.

4. Verfahren nach Anspruch 1 oder 2, **dadurch gekennzeichnet, dass** der Anspritzpunkt unter Versetzung nach außen gegenüber der umgebenden Spritzlingswandung hergestellt wird.

## Claims

1. A method for producing an injection moulding for pharmaceutical use, such as a closure stopper (1) for pharmaceutical bottles, a protective cap (2) for medicinal sprays or a sealing element (44) for pharmaceutical containers, **characterised in that** the injection moulding is produced at least in a part region from a thermoplastic elastomer plastics material having a proportion of a mineral filler of 30% or more and this part region is realised by a hot channel moulding operation, the injection point being formed as a smooth-surfaced mark.

2. A method according to Claim 1, **characterised in that** the injection moulding is produced as a whole from an elastomer plastics material.

3. A method according to Claim 1 or 2, **characterised in that** the hot channel injection point is realised to merge outwardly without discontinuity into the surrounding wall of the injection moulding.

4. A method according to Claim 1 or 2, **characterised in that** the injection point is realised with a discontinuity outwards relative to the surrounding injection moulding wall.

## Revendications

1. Procédé de fabrication d'un objet servant à une application pharmaceutique, tel un bouchon de fermeture (1) pour un flacon pharmaceutique, un capuchon de protection (2) pour des seringues médicales ou un élément d'étanchéité (44) pour des récipients pharmaceutiques, **caractérisé en ce que** l'objet moulé par injection est fabriqué, au-moins en une zone partielle, en un matériau synthétique thermoplastique de type élastomère comportant une proportion de matériau de remplissage de 30 % ou plus et **en ce que** cette zone partielle est réalisée par une injection à canal chaud, le point d'injection étant constitué en tant qu'empreinte de surface lisse.

2. Procédé selon la revendication 1, **caractérisé en ce que** l'objet moulé par injection est globalement fabriqué en matériau synthétique de type élastomère.

3. Procédé selon la revendication 1 ou 2, **caractérisé en ce que** le point d'injection à canal chaud est fabriqué de manière continue sans décalage vers l'extérieur dans la paroi environnante de l'objet moulé par injection

4. Procédé selon la revendication 1 ou 2, **caractérisé en ce que** le point d'injection est fabriqué avec décalage vers l'extérieur par rapport à la paroi environnante de l'objet moulé par injection.
